# EUROPÄISCHE PATENTSCHRIFT

(11) **EP 1 621 371 B1**
(45) Veröffentlichungstag und Bekanntmachung des Hinweises auf die Patenterteilung: **19.12.2007**
(21) Anmeldenummer: 05014623.2
(22) Anmeldetag: 06.07.2005
(51) Int. Cl.: B60D 1/06, B60D 1/54

(54) **Anhängekupplung für Kraftfahrzeuge**
Trailer coupling for motor vehicles
Attelage de remorque pour véhicules automobiles

(30) Priorität: 31.07.2004 DE 202004012041 U
(43) Veröffentlichungstag der Anmeldung: 01.02.2006
(73) Patentinhaber: WESTFALIA - Automotive GmbH, 33378 Rheda-Wiedenbrück (DE)
(72) Erfinder: Aufderheide, Reinhold, 33397 Rietberg (DE); Domke, Friedrich, 33442 Herzebrock-Clarholz (DE); Hermbusch, Gerhard, 33449 Langenberg (DE); Peitz, Jürgen, 33378 Rheda-Wiedenbrück (DE); Wyrwich, Martin, 33378 Rheda-Wiedenbrück (DE)
(74) Vertreter: Grosse, Wolf-Dietrich Rüdiger

(56) Entgegenhaltungen:
- DE-A1- 19 858 978
- DE-B- 10 252 722

## Beschreibung

Die Erfindung betrifft eine Anhängekupplung für Kraftfahrzeuge, umfassend eine fahrzeugfest angeordnete, zwischen Betriebs-und Ruhelage schwenkbar axial selbsttätig verschieblich gelagerte Kugelstange, die an ihrem freien Ende eine Kupplungskugel trägt und sowohl in ihrer Ruhelage als auch in ihrer Betriebslage über durch axiales Verschieben der Kugelstange in Eingriff bringbare Formschlußkonturen einerseits eines Kugelstangenlagerkopfes und andererseits eines diesem gegenüberliegenden Bauteiles drehfest festlegbar ist.

Eine Anhängekupplung dieser Art, jedoch ohne Dichtung, ist durch die DE 102 52 722 B3 bekanntgeworden. Der Kugelstangenlagerkopf ist auf einer an einem Anbauflansch befestigten Hohlwelle angeordnet, die zentral integriert mit einer axial wirkenden Verriegelung des Kugelstangenlagerkopfes zum in Eingriff bringen der Formschlusskonturen sowohl in der Betriebslage als auch in der Ruhelage der Kugelstange ausgebildet ist. Die axial wirkende Verriegelung ermöglicht eine selbsttätige axiale Zwangsverschiebung des Kugelstangenlagerkopfes mit der Kugelstange, sobald die Sperrung in einer Drehendlage aufgehoben wird. Dies dann, wenn über ein von außen betätigbares Druck- oder Zugmittel ein Sperrbolzen ausgerückt bzw. freigegeben wird. Das kann beispielsweise motorisch oder mittels eines Handrades, wie aus der DE-U-94 08 478.5 bekannt, ausgelöst werden, indem eine Zahnstange einen Bowdenzug als Verbindung zum Sperrbolzen betätigt, so daß der Sperrbolzen gegen die Kraft eines Rückstellfederelementes zurückgezogen wird. Durch das Zurückziehen des Sperrbolzens kommt die Kugelstange bzw. deren Kugelstangenlagerkopf aus ihrer Formschlussverbindung, bei der bekannten Kupplung ausgebildet in Form von Kugeln und im gegenüberliegenden Bauteil komplementären Kalotten, von Befestigungs- und Anbauflansch frei und kann nach dem Entriegln somit unter der Schwerkraft bei gleichzeitiger axialer Verschiebung in eine Zwischenposition schwenken.

Aus der Zwischenposition heraus lässt sich die Kugelstange manuell oder motorbetrieben in die gewünschte Drehendlage verschwenken und durch Vorrücken des Sperrbolzens verriegeln. Sowohl in der Ruhelage, in welcher sich die Kugelstange in etwa quer zur Fahrzeuglängsrichtung unter dem Stoßfänger bzw. der Heckschürze eines Kraftfahrzeugs befindet, als auch in der Betriebslage, in welcher sich die Kugelstange im wesentlichen in Fahrzeuglängsrichtung befindet, wird die Kugelstange dann mittels der zwischen dem Kugelstangenlagerkopf und dem Bau- bzw. Anbauteil wirksamen Formschlussverbindung unverdrehbar festgelegt. Denn die Formschlussverbindung, bei einer durch die DE 198 59 961 A1 bekanntgewordenen Anhängekupplung besteht diese beispielsweise aus einer Verzahnung sowie einer Gegenverzahnung, greift in den beiden Drehendstellungen des Kugelstangenlagerkopfes ineinander.

Eine Anhängerkupplung mit einer Dichtung zwischen den drehenden Teilen, und zwar zwischen einem auf einer Lagerwelle befestigten Lagerkopf der Kugelstange und einem den Lagerkopf aufnehmenden Gehäuse, ist aus der DE 198 57 978 A1 bekannt.

Der Erfindung liegt die Aufgabe zugrunde, eine gattungsgemäß Anhängekupplung mit verbesserter Betriebssicherheit zu schaffen, insbesondere die relativ gegeneinander verdrehbaren Bauteile durch eine Abdichtung zu schützen.

Diese Aufgabe wird erfindungsgemäß dadurch gelöst, daß zwischen dem Kugelstangenlagerkopf und dem gegenüberliegenden Bauteil eine in jeder, die axialen Verschiebepositionen einschließenden Betriebsstellung des Kugelstangenlagerkopfes gegen das Bauteil vorgespannte Dichtung angeordnet ist. Mit der erfindungsgemäßen Maßnahme lassen sich mehrere Vorteile gleichzeitig erreichen. Die stetig vorhandene Vorspannung gewährleistet, daß der umlaufende Spalt bzw. die Öffnung zwischen dem Kugelstangenlagerkopf und dem Bau- bzw. Anbauteil in jedem Betriebszustand nach außen hin stets geschlossen bleibt und kein Schmutz in das Verriegelungssystem gelangen kann. Beim Schwenken der Kugelstange mit dem Kugelstangenlagerkopf gleitet die Dichtung über das gegenüberliegende Bauteil (Anbauflansch oder dergleichen). Weiterhin wird außerdem das Lösen und die danach einsetzende gleichzeitige axiale Verschiebung des schwenkbaren Systems durch die Dichtung unterstützt, da durch deren Vorspannung der Kugelstangenlagerkopf von dem gegenüberliegenden Bauteil leicht abgestoßen wird.

Eine Ausgestaltung der Erfindung sieht eine auf den Kugelstangenlagerkopf aufgestülpte, ringartige Dichtung vor. Die somit kreisrunde Dichtung mit zentraler Anordnung auf dem Kugelstangenlagerkopf schließt das Verriegelungssystem, d.h. insbesondere die Mittel der Formschlussverbindung, koaxial zur Schwenkachse umfassend ein.

Nach einer bevorzugten Ausführung der Erfindung ist der Innendurchmesser der Dichtung kleiner als der Außendurchmesser eines an dem Kugelstangenlagerkopf zum Aufstülpen der Dichtung vorgesehenen, umlaufenden Absatzes. Das ermöglicht einerseits eine einfache Montage, andererseits einen sicheren Sitz der auf den Absatz aufgestülpten bzw. -gesteckten Dichtung.

Eine bevorzugte Ausführung der Erfindung sieht vor, daß die Dichtung einen massiven Aufsteckfuß und eine daran reflektorartig ausgebildete, in situ gegen das gegenüberliegende Bauteil angestellte dünne Dichtlippe aufweist. Hierbei ist dünn in Relation zu dem massiven, im Querschnitt vorzugsweise rechteckigen und damit einfach montierbaren Aufsteckfuß zu verstehen. Die reflektorartige, stetig schräg abstehende und den Abstand zwischen den Bauteilen überbrückende Dichtlippe kann hierbei in einfacher Weise bei der Montage des Kugelstangenlagerkopfes vorgespannt werden, indem die Dichtung bereits in der endgültigen Einbaulage des Kugelstangenlagerkopfes durch die Anstellung bzw. Anlage an das gegenüberliegende Bauteil leicht vorgespannt wird. In der verriegelten jeweiligen Drehendlage wird diese Vorspannung dann noch deutlich weiter verstärkt, weil der Kugelstangenlagerkopf axial näher an das gegenüberliegende Bauteil herangerückt bzw. vorgeschoben wird. Durch die in ihrer Einbaulage von Beginn an vorgespannte zentrale Dichtung wird ein weiterer Vorteil erreicht, weil nämlich die Dichtlippe bei Schwenkbewegungen nicht durch eine unvorhergesehene Knickung, wie z.B. bei einem Fallenbalg unvermeidbar, unerwünscht zwischen die relativ zueinander beweglichen Teile geraten und damit eine Fehlverriegelung bewirken kann.

Wenn die Dichtlippe vorzugsweise aus einem Rückstelleigenschaften aufweisenden Material besteht, wobei sich ein solches Material auswählen lässt, das sowohl bei tiefen als auch bei hohen Umgebungstemperaturen der Rückstelleffekt der Dichtlippe aufrechterhalten bleibt, vorzugsweise Silikon, wird beim Lösen des Schwenksystems das axiale Abrücken bzw. Verschieben unbeeinträchtigt von diesen äußeren Einflüssen unterstützt.

Weitere Merkmale und Einzelheiten der Erfindung ergeben sich aus den Ansprüchen und der nachfolgenden Beschreibung eines in den Zeichnungen in vereinfachter Weise dargestellten Ausführungsbeispiels der Erfindung. Es zeigen:
- Fig. 1: in einer perspektivischen Gesamtansicht eine Anhängekupplung mit in ihrer Betriebslage verriegelter, sich mittig in Längsrichtung eines nicht dargestellten Fahrzeugs erstreckender Kugelstange, hier angeschlossen an einen Hand rad-Auslösemechanismus;
- Fig. 2: als Einzelheit der Anhängekupplung nach Fig. 1 deren Kugelstangenlagerkopf mit dem gegenüberliegenden Bauteil und gegen dieses angestellter Dichtung, in der entriegelten Stellung der Kugelstange, unten links in einem Teilschnitt dargestellt; und
- Fig. 3: eine Darstellung wie gemäß Fig. 2, demgegenüber mit den Bauteilen in der verriegelten Stellung der Kugelstange dargestellt.

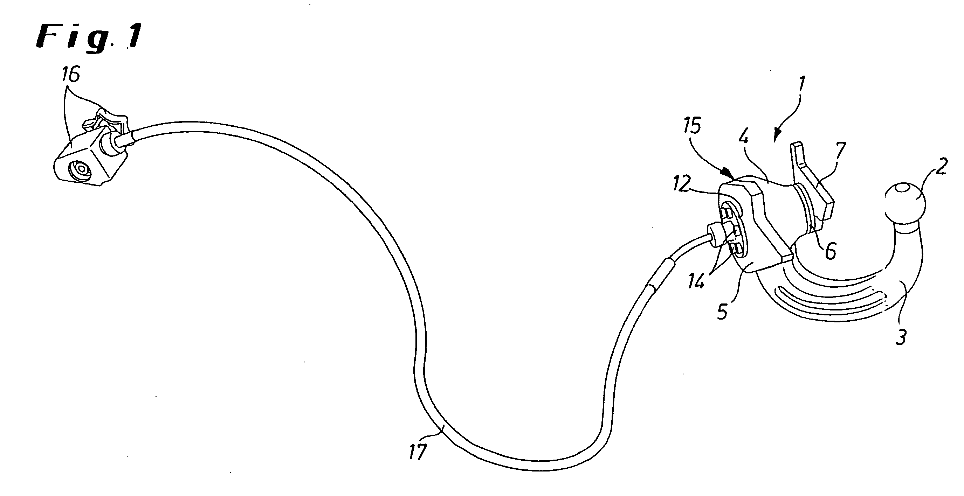

Eine in Fig. 1 gezeigte Anhängekupplung ist über einen ein- oder mehrteiligen Querträger an einem Fahrzeug (nicht dargestellt) befestigt. Die Anhängekupplung 1 umfaßt im Ausführungsbeispiel eine gekröpfte, an ihrem freien Ende eine Kupplungskugel 2 tragende Kugelstange 3, die mit ihrem Kugelstangenlagerkopf 4 hier zwischen einem Anbauflansch 5 und einem unter Zwischenschaltung einer Ausgleichsscheibe 6 gegenüberliegenden Verbindungsblech 7 angeordnet ist. Die Halterung des Kugelstangenlagerkopfes erfolgt mittels einer Hohlwelle (vgl. die DE 102 52 722 B3), auf der die Kugelstange mit ihrem Kugelstangenlagerkopf angeordnet ist. Statt einer Befestigung zwischen zwei Bauteilen (Verbindungsblech 7 mit vorgeschalteter Ausgleichsscheibe 6 und Anbauflansch 5) kann der Kugelstangenlagerkopf 4 an einem Ende auch durch Endkappen bzw. -hülsen verschlossen und nur über den Anbauflansch 5, gegebenenfalls unter Einbeziehung eines Knotenbleches, befestigt werden. Am Beispiel der Fig. 1 ist die Hohlwelle mit einer Montagebuchse verschraubt, die von der Außenseite des Anbauflansches 5 her in eine in Bezug auf die Hohlwelle zentrische Bohrung mit einer Nabe eingesetzt ist, wobei die zentrische Bohrung der Außenseite des Anbauflansches 5 von einem Flansch der Montagebuchse überkragt wird, so daß durch den Flansch 12 in einen Kragen der Hohlwelle eingeschraubte Befestigungsschrauben 14 für eine exakte Positionierung der Hohlwelle sorgen.

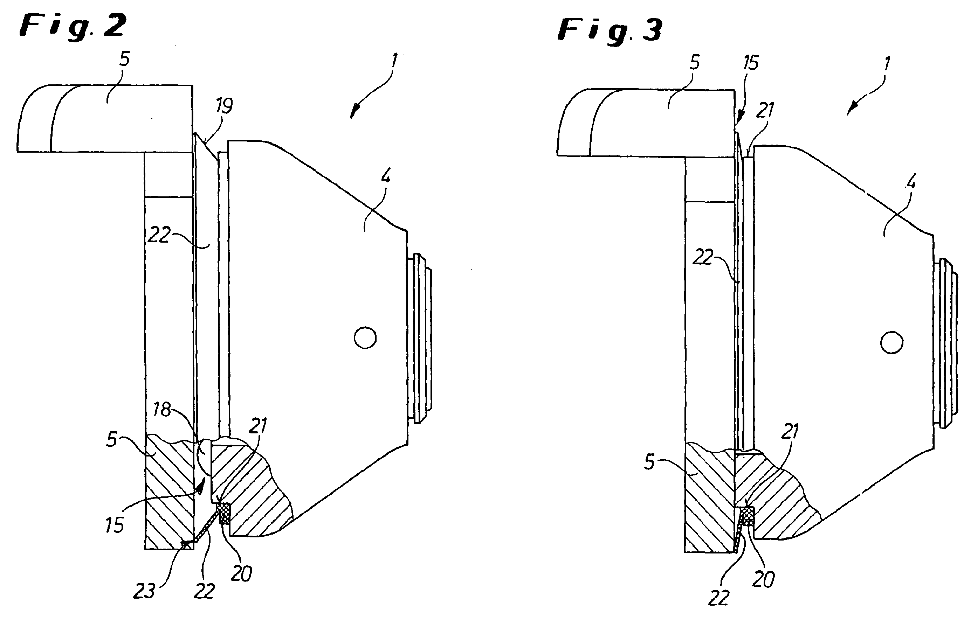

In den Drehendlagen (Betriebs- oder Ruhelage) ist die Kugelstange 3 bzw. ihr Kugelstangenlagerkopf 4 über eine Formschlussverbindung 15, die hier aus Kugeln 18 (vgl. Fig. 2) und diesen gegenüberliegend in dem Anbauflansch 5 zugeordneten, nicht gezeigten Kalotten besteht, drehfest festgelegt. Zum Entriegeln und damit Freigeben der Schwenkbewegung des Kugelstangenlagerkopfes 4 mit der Kugelstange 3 und gleichzeitiger axialer Verschiebung ist im Ausführungsbeispiel nach Fig. 1 von der Seite des Anbauflansches 5 her an die Anhängekupplung 1 ein Handrad-Auslösemechanismus 16 über einen Bowdenzug 17 angeschlossen, der an seinen in dem Kugelstangenlagerkopf 4 eintauchenden Ende mit einem in der Hohlwelle vor- und zurückbewegbaren, bekannten Sperrbolzen verbunden ist.

Eine solche nach dem Auslösen bzw. Entriegeln vorliegende Zwischenstellung der Kugelstange, aus der heraus sie manuell oder motorisch in die gewünschte Drehendlage verschwenkt wird, zeigt die Fig. 2. Der Kugelstangenlagerkopf 4 hat sich axial nach rechts, d.h. von dem gegenüberliegenden Anbauflansch 5 selbsttätig wegbewegt. Die Kugeln 18 der Formschlussverbindung 15 sind aus ihrem Verriegelungssitz in den Kalotten des gegenüberliegenden Anbauflansches 5 herausgetreten. Der Spalt zwischen dem Kugelstangenlagerkopf 4 und dem Anbauflansch 5 wird von einer Dichtung 19 nach außen hin voll umfänglich geschlossen. Diese besitzt einen massiven, im Ausführungsbeispiel im Querschnitt rechteckigen Aufsteckfuß 20, mit dem sie zentral auf einen an dem Kugelstangenlagerkopf 4 ausgebildeten Ringkragen bzw. Absatz 21 aufgesteckt/aufgestülpt ist, und eine von dem Aufsteckfuß 20 ausgehende, stetig schräg zum Außenumfang hin abstehende und somit reflektorartig ausgebildete dünne Dichtlippe 22.

Die Dichtlippe 22 wird mit dem Einbau der Dichtung 19 zwischen dem Kugelstangenlagerkopf 4 und dem Anbauflansch 5 in der in Fig. 2 gezeigten entriegelten Stellung bereits so montiert, daß sie von vornherein mit einer leichten Vorspannung an den Anbauflansch 5 angestellt ist und somit auch schon in dieser Position bzw. einer entriegelten Zwischenstellung für eine dichte Anlage 23 an den Anbauflansch 5 sorgt. Damit bleibt bei jedem Betriebszustand das Verriegelungssystem bzw. die Formschlussverbindung 15 völlig abgedichtet, so daß kein Schmutz eindringen kann. Wie sich aus Fig. 3 entnehmen lässt, wird die Dichtlippe 22 in der verriegelten Stellung (Drehendlage der Ruhe- oder Betriebsstellung), in der der Kugelstangenlagerkopf 4 axial näher an den Anbauflansch 5 herangerückt ist, noch stärker vorgespannt. Die stetige, mehr oder weniger große Vorspannung der Dichtlippe 22 bzw. der Dichtung 19 bietet dem Schwenksystem somit einen umfassenden Schutz.

## Patentansprüche

1. Anhängekupplung (1) für Kraftfahrzeuge, umfassend eine fahrzeugfest angeordnete, zwischen Betriebs-und Ruhelage schwenkbar sowie axialselbsttätig verschieblich gelagerte Kugelstange (3), die an ihrem freien Ende eine Kupplungskugel (2) trägt und sowohl in ihrer Ruhelage als auch in ihrer Betriebslage über durch axiales Verschieben der Kugelstange (2) in Eingriff bringbare Formschlußkonturen (15) einerseits eines Kugelstangenlagerkopfes (4) und andererseits eines diesem gegenüberliegenden Bauteiles (5) drehfest festlegbar ist,
**dadurch gekennzeichnet,**
**daß** zwischen dem Kugelstangenlagerkopf (4) und dem gegenüberliegenden Bauteil (5) eine in jeder, die axialen Verschiebepositionen einschlie-ßenden Betriebsstellung des Kugelstangenlagerkopfes (4) gegen das Bauteil (5) vorgespannte Dichtung (19) angeordnet ist.

2. Anhängekupplung nach Anspruch 1,
**gekennzeichnet durch**
eine auf den Kugelstangenlagerkopf (4) aufgestülpte, ringartige Dichtung (19).

3. Anhängekupplung nach Anspruch 1 oder 2,
**dadurch gekennzeichnet,**
**daß** der Innendurchmesser der Dichtung kleiner als der Aussendurchmesser eines an dem Kugelstangenlagerkopf zum Aufstülpen der Dichtung vorgesehenen, umlaufenden Absatzes ist.

4. Anhängekupplung nach einem der Ansprüche 1 bis 3,
**dadurch gekennzeichnet,**
**daß** die Dichtung (19) einen massiven Aufstekfuß (20) und eine daran reflektorartig ausgebildete, in situ gegen das gegenüberliegende Bauteil (5) angestellte dünne Dichtlippe (22) aufweist.

5. Anhängekupplung nach Anspruch 4,
**dadurch gekennzeichnet,**
**daß** die Dichtlippe (22) aus einem Rückstelleigenschaften aufweisenden Material besteht.

## Claims

1. A trailer coupling (1) for motor vehicles, comprising a ball rod (3) that is rigidly arranged on the vehicle and supported such that it can be pivoted between an operating position and an idle position, as well as automatically displaced in the axial direction, wherein said ball rod carries a ball (2) on its free end and can be fixed in a rotationally rigid fashion in its idle position as well as in its operating position by means of positive locking contours (15) that can be engaged by axially displacing the ball rod (2), namely positive locking contours of a ball rod lantern (4) on one hand and of a component (5) lying opposite of the ball rod lantern on the other hand,
**characterized in**
**that** a seal (19) is arranged between the ball rod lantern (4) and the opposite component (5) and prestressed relative to the component (5) in each operating position of the ball rod lantern (4) including the axial displacement positions.

2. The trailer coupling according to Claim 1,
**characterized in**
a ring-like seal (19) that is slipped on the ball rod lantern (4).

3. The trailer coupling according to Claim 1 or 2,
**characterized in**
**that** the inside diameter of the seal is smaller than the outside diameter of a peripheral shoulder provided on the ball rod lantern for slipping on the seal.

4. The trailer coupling according to one of Claims 1 to 3,
**characterized in**
**that** the seal (19) features a massive slip-on base (20) and a thin sealing lip (22) that is realized thereon in a reflector-like fashion and positioned in situ against the opposite component (5).

5. The trailer coupling according to Claim 4,
**characterized in**
**that** the sealing lip (22) consists of a material with restoring properties.

## Revendications

1. Accouplement d'attelage (1) pour véhicules automobiles, comprenant une barre d'accouplement (3) disposée fixement sur le véhicule et s'appuyant de manière à pouvoir pivoter entre la position de repos et la position de fonctionnement et se décaler automatiquement axialement, qui supporte à son extrémité libre une sphère d'accouplement (2) et peut être fixée de manière fixe en rotation aussi bien en position de repos qu'en position de fonctionnement par des contours à correspondance géométrique (15) d'une tête d'appui de barre d'accouplement (4) pouvant être amenés en engrènement par décalage axial de la barre d'accouplement (3) et d'autre part d'une composante (5) opposée à celle-ci,
**caractérisé en ce que**,
entre la tête d'appui de barre d'accouplement (4) et la composante qui lui est opposée (5), un joint précontraint (19) dans toute position de fonctionnement incluant les positions de décalage axial de la tête d'appui de barre d'accouplement (4) est disposé contre la composante (5).

2. Accouplement d'attelage selon la revendication 1,
**caractérisé par**
un joint de forme annulaire (19) emboîté sur la tête d'appui de barre d'accouplement (4).

3. Accouplement d'attelage selon la revendication 1 ou 2,
**caractérisé en ce que**
le diamètre intérieur du joint est inférieur au diamètre extérieur d'un talon périphérique prévu sur la tête d'appui de barre d'accouplement (4) où le joint est emboîté.

4. Accouplement d'attelage selon une des revendications 1 à 3,
**caractérisé en ce que**
le joint (19) présente un pied de fichage massif (20) et une lèvre d'étanchéité mince (22) réalisée dessus à la manière d'un réflecteur et approchée in situ contre la composante opposée (5).

5. Accouplement d'attelage selon la revendication 4,
**caractérisé en ce que**
la lèvre d'étanchéité (22) est composée d'une matière présentant des capacités de rappel.
